# FASCICULE DE BREVET EUROPEEN

(11) **EP 2 354 523 B1**
(45) Date de publication et mention de la délivrance du brevet: **30.07.2014**
(21) Numéro de dépôt: 10195332.1
(22) Date de dépôt: 16.12.2010
(51) Int. Cl.: F02M 35/12

(54) **Architecture de groupe motopropulseur diesel suralimente**
Anordnung für eine aufgeladene Dieselbrennkraftmaschine
Assembly for a supercharged diesel engine

(30) Priorité: 27.01.2010 FR 1050534
(43) Date de publication de la demande: 10.08.2011
(73) Titulaire: Peugeot Citroën Automobiles SA, 78140 Vélizy-Villacoublay (FR)
(72) Inventeur: Dore, Martial, 78000 Versailles (FR)

(56) Documents cités:
- EP-A2- 1 607 615
- FR-A1- 2 921 123
- US-A- 5 116 231
- US-A1- 2009 133 658

## Description

La présente invention concerne une architecture de groupe motopropulseur diesel suralimenté.

Un moteur thermique à allumage par compression - appelé aussi « moteur diesel », est dit « suralimenté » lorsqu'on a augmenté sa puissance par l'adjonction d'un turbocompresseur, c'est-à-dire une pompe entraînée par les gaz d'échappement et insufflant de l'air sous pression dans les cylindres. La suralimentation permet, ainsi, la combustion de plus de carburant.

Les moteurs suralimentés concernés comprennent aussi un raccord d'admission d'air, positionné en sortie du refroidisseur d'air de suralimentation (désigné « RAS » dans la suite du texte), dont la fonction est d'acheminer l'air du RAS au doseur, ainsi qu'un doseur d'air, dont les fonctions sont de forcer la recirculation des gaz d'échappement (désignée « EGR » dans la suite du texte) et d'accélérer la coupure du moteur par la fermeture brutale de l'EGR et de l'arrivée d'air. Un atténuateur acoustique est également prévu en sortie du turbocompresseur.

L'ouverture et la fermeture du doseur d'air se fait à l'aide d'un papillon, et L'EGR assure le recyclage des gaz d'échappement en réinjectant ces derniers à l'admission.

La boucle se constitue donc d'un turbocompresseur, d'un RAS, d'un raccord d'admission d'air, d'un doseur d'air et d'un atténuateur acoustique.

L'implantation de tous ces composants en zone haute du moteur nécessite de disposer de suffisamment de volume disponible dans le compartiment moteur. La tendance est de vouloir abaisser la ligne de capot des véhicules, pour satisfaire des contraintes de « style » et la volonté de diminuer les blessures en cas de choc piéton.

Il existe déjà différentes architectures de groupes motopropulseurs comprenant notamment des moyens d'atténuation acoustique.

A titre d'exemple, le document FR 2 824 383 décrit un dispositif d'atténuation du niveau sonore d'un circuit de fluide gazeux comportant un turbocompresseur et un module en matière plastique. Ce module comprend un conduit d'entrée, connecté à une première extrémité d'une cavité de dimensions et de forme déterminées, la deuxième extrémité de la cavité étant également connectée à un conduit de sortie correspondant au conduit d'entrée d'un module adjacent du même type ou à un conduit indépendant. Le conduit d'entrée et/ou le conduit de sortie de la cavité se prolonge(nt) à l'intérieur de la cavité par une portion de conduit interne, de longueur déterminée, de diamètre déterminé et de section non fermée sur au moins une partie de sa longueur à partir de son extrémité libre. Ces paramètres et les paramètres de forme et de dimensions de la cavité sont déterminés par calcul pour répondre à des critères d'atténuation spécifique à chaque application.

A titre d'exemple également, le document FR 2 864 582 décrit un module d'échange de chaleur pour la régulation de la température des gaz admis dans un moteur thermique de véhicule automobile. Ce module comprend un refroidisseur d'air d'admission et un refroidisseur des gaz d'échappement recirculés. Le refroidisseur de l'air d'admission comprend une boîte d'entrée et une boîte de sortie de l'air d'admission. Une canalisation d'entrée est raccordée à la boîte d'entrée et une canalisation de sortie est raccordée à la boîte de sortie du refroidisseur d'air d'alimentation. Le refroidisseur des gaz d'échappement recirculés comprend une boîte d'entrée et une boîte de sortie des gaz d'échappement recirculés. Une canalisation d'entrée des gaz d'échappement recirculés est raccordée à la boîte d'entrée des gaz d'échappement recirculés. Une première dérivation de contournement relie directement la boîte d'entrée à la boîte de sortie du refroidisseur des gaz d'échappement recirculés.

Enfin, un autre exemple est constitué par le document FR 2 924 764, qui décrit un dispositif d'atténuation acoustique pour une ligne d'admission d'un moteur thermique à combustion interne. Ce dispositif comporte :
- une enveloppe tubulaire extérieure qui présente deux portions d'extrémité, et au moins deux renflements périphériques qui s'étendent radialement vers l'extérieur à partir des portions d'extrémité et qui sont reliés entre eux par un rétrécissement, et
- une structure de conduite intérieure solidaire des portions d'extrémité et en communication fluide avec l'intérieur de chaque renflement, de façon à délimiter une chambre annulaire de résonance avec ce renflement, cette structure comprenant au moins deux tronçons cylindriques axialement juxtaposés de part et d'autre d'un espace axial de séparation.

Les chambres formées par ces renflements communiquent entre elles, radialement entre le rétrécissement et la structure de conduite, par l'espace formé en regard du rétrécissement.

L'état de l'art dans le domaine est aussi illustré par les brevets FR 2 921 123 A et EP 1 607 615 A.

Le but de la présente invention est de fournir une architecture de groupe motopropulseur diesel suralimenté, qui permette une meilleure intégration des différentes fonctions qui constituent la ligne d'admission d'air sur le moteur, et une meilleure optimisation de l'occupation des volumes disponibles sous le capot du véhicule.

C'est également un but de la présente invention de fournir une telle architecture, qui soit de conception et de réalisation simple, et qui soit économique.

Pour parvenir à ces buts, la présente invention a pour objet une architecture de groupe motopropulseur diesel suralimenté, dans laquelle il est formé un module compact intégrant sous forme d'une seule et même pièce le doseur d'air d'admission de l'air au moteur, le raccord d'admission d'air à la sortie du refroidisseur d'air de suralimentation et l'atténuateur acoustique relié à la sortie du turbocompresseur. De plus, ce module compact est inséré dans la zone supérieure du groupe motopropulseur en lieu et place du raccord d'admission d'air.

L'atténuateur acoustique est monté directement et sans pièce intermédiaire sur le raccord d'admission d'air, et le doseur d'air est monté adjacent au raccord d'admission d'air de telle sorte que l'atténuateur acoustique, le raccord d'admission d'air et le doseur d'air sont sensiblement alignés et adjacents pour limiter le volume occupé par le module compact.

Le doseur d'air est monté sur le raccord de sortie d'air du refroidisseur d'air de suralimentation, lequel est adjacent et rigidement lié au raccord d'admission d'air.

L'invention a également pour objet un groupe motopropulseur diesel suralimenté, qui comprend un moteur diesel, un turbocompresseur entraîné par une turbine placée sur la ligne d'échappement des gaz du moteur, et une ligne d'amission d'air au moteur comprise entre le refroidisseur d'air de suralimentation et l'admission du moteur, et ce nouveau groupe motopropulseur diesel suralimenté présente une architecture conforme à celle décrite ci-dessus dans ses grandes lignes.

L'invention a enfin pour objet un véhicule, en particulier un véhicule automobile avec une motorisation de type diesel à suralimentation, qui comprend un groupe motopropulseur conforme à celui décrit ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est un schéma fonctionnel d'un groupe motopropulseur diesel suralimenté,
- la figure 2 représente une architecture de groupe motopropulseur diesel suralimenté selon l'art antérieur,
- la figure 3 représente une architecture de groupe motopropulseur diesel suralimenté selon la présente invention,
- la figure 4 est une vue frontale d'un module compact intégrant sous forme d'une seule et même pièce le doseur d'air, le raccord d'admission d'air et l'atténuateur acoustique, et
- la figure 5 est une vue en perspective du module compact de la figure 4.

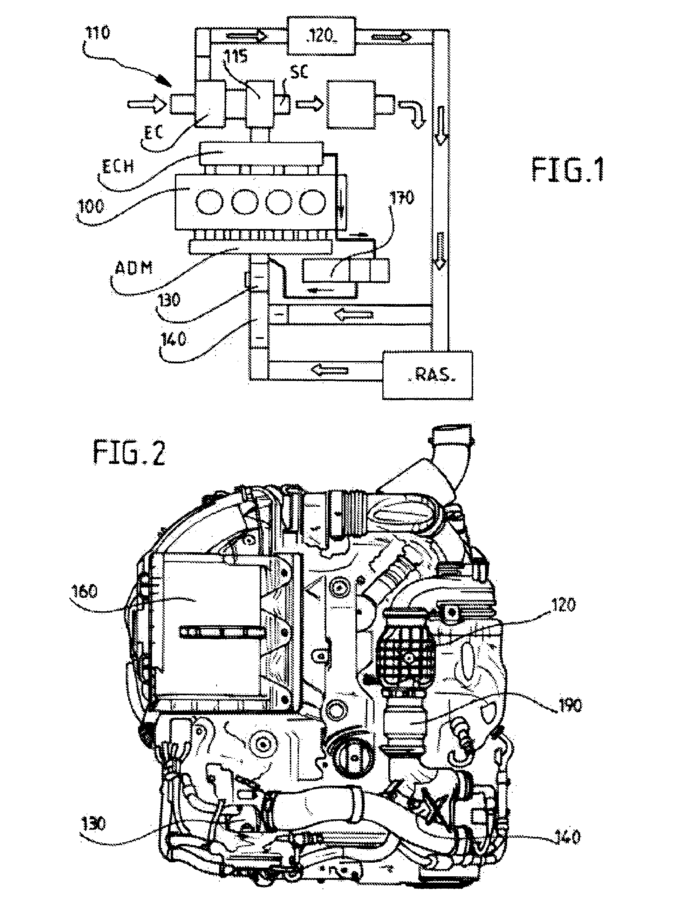

En référence au schéma fonctionnel de la figure 1, un groupe motopropulseur (désigné aussi « GMP » dans la suite du texte), de type diesel, suralimenté, comprend un moteur thermique diesel, de quatre cylindres par exemple, référencé 100, avec une admission ADM et un échappement ECH. Il comprend, de plus, un étage de suralimentation 110 lequel comporte une turbine 115 actionnée par les gaz d'échappement, une entrée EC et une sortie SC de compresseur. Un atténuateur acoustique 120 est monté en sortie de l'étage de suralimentation 110. Un doseur d'air 130 monté sur l'admission ADM vient forcer l'EGR 170. Un raccord d'amission d'air 140 est positionné en sortie du RAS, dont la fonction est d'acheminer l'air du RAS au doseur 130.

La figure 2 représente une architecture de GMP diesel suralimenté classique, connue de l'art antérieur. Dans une telle architecture, le doseur d'air 130, l'atténuateur acoustique 120 et le raccord d'admission d'air 140 sont relativement éloignés les uns des autres et situés tous les trois dans la zone supérieure du GMP. Le doseur d'air 130 est du même côté que le filtre à air 160 et, par conséquent du côté opposé aux deux autre organes mentionnés ci-dessus de la ligne d'admission d'air, à savoir le raccord d'admission d'air 140 et l'atténuateur acoustique 120. De plus, le raccord d'admission d'air 140 et l'atténuateur acoustique 120 sont sensiblement éloignés l'un de l'autre et séparés par la tubulure 190.

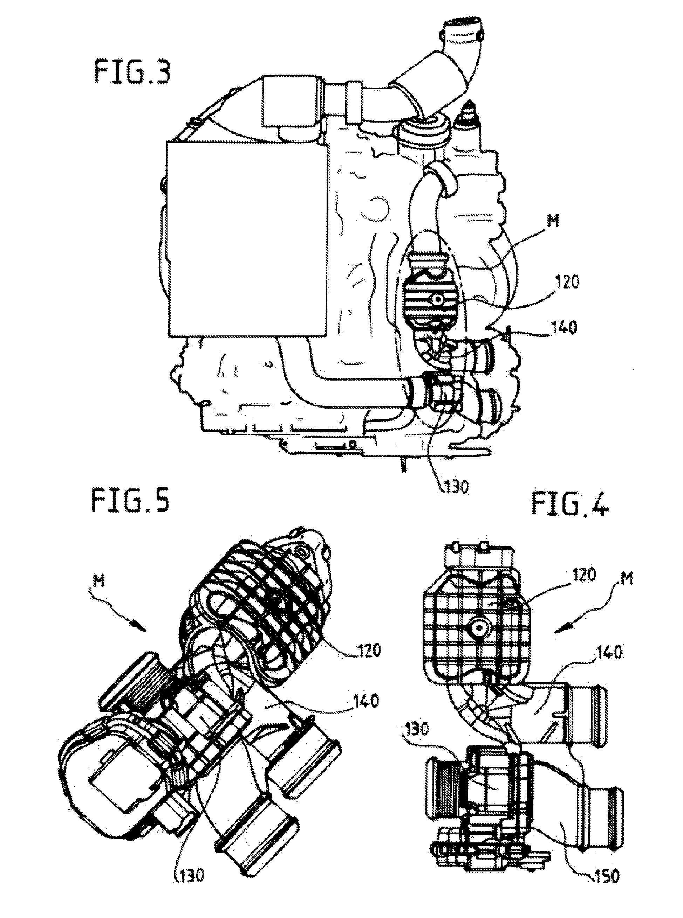

En référence au dessin de la figure 3, selon le principe de la présente invention, il est formé un module compact M, qui intègre sous forme d'une seule et même pièce le doseur d'air 130, le raccord d'admission d'air 140 et l'atténuateur acoustique 120.

De plus, ce module compact M est inséré dans la zone supérieure du groupe motopropulseur en lieu et place du raccord d'admission d'air monté sur l'architecture de la figure 2 connue de l'art antérieur.

L'atténuateur acoustique 120 est monté directement et sans pièce intermédiaire sur le raccord d'admission d'air 140. Le doseur d'air 130 est monté adjacent au raccord d'admission d'air 140, de telle sorte que l'atténuateur acoustique 120, le raccord d'admission d'air 140 et le doseur d'air sont sensiblement alignés et adjacents pour limiter le volume occupé par le module compact M.

Le doseur d'air 130 est monté sur le raccord de sortie d'air 150 du refroidisseur d'air de suralimentation RAS, lequel est adjacent et rigidement lié au raccord d'admission d'air 140.

Cette solution, qui consiste à intégrer une partie des fonctions du GMP au coeur d'une seule et même pièce sous la forme d'un module compact, présente de nombreux avantages, parmi lesquels les avantages suivants :
- elle permet une optimisation de l'occupation des volumes disponibles sous le capot du véhicule,
- elle est de conception et de réalisation simple, et
- elle est économique.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Architecture de groupe motopropulseur diesel suralimenté, **caractérisée en ce qu'**il est formé un module compact (M) intégrant sous forme d'une seule et même pièce le doseur d'air (130) d'admission de l'air au moteur, le raccord d'admission d'air (140) à la sortie du refroidisseur d'air de suralimentation (RAS) et l'atténuateur acoustique (120) relié à la sortie du turbocompresseur, et **en ce que** ce module compact (M) est inséré dans la zone supérieure du groupe motopropulseur en lieu et place du raccord d'admission d'air.

2. Architecture selon la revendication 1, **caractérisée en ce que** l'atténuateur acoustique (120) est monté directement et sans pièce intermédiaire sur le raccord d'admission d'air (140), et **en ce que** le doseur d'air (130) est monté adjacent au raccord d'admission d'air (140) de telle sorte que l'atténuateur acoustique (120), le raccord d'admission d'air (140) et le doseur d'air sont sensiblement alignés et adjacents pour limiter le volume occupé par le module compact (M).

3. Architecture selon la revendication 2, **caractérisée en ce que** le doseur d'air (130) est monté sur le raccord de sortie d'air (150) du refroidisseur d'air de suralimentation (RAS), lequel est adjacent et rigidement lié au raccord d'admission d'air (140).

4. Groupe motopropulseur diesel suralimenté, comprenant un moteur diesel (100), un turbocompresseur (110) entraîné par une turbine (115) placée sur la ligne d'échappement des gaz du moteur, et une ligne d'amission d'air au moteur (100) avec un refroidisseur d'air de suralimentation (RAS), **caractérisé en ce que** son architecture est conforme à l'une quelconque des revendications 1 à 3.

5. Véhicule, en particulier véhicule automobile, avec une motorisation de type diesel à suralimentation, **caractérisé en ce qu'**il comprend un groupe motopropulseur conforme à la revendication 4.

## Patentansprüche

1. Anordnung einer aufgeladenen Dieselbrennkraftmaschine, **dadurch gekennzeichnet, dass** sie aus einem kompakten Modul (M) besteht, das in Form eines einzigen Teils den Ansaugluftdosierer (130) des Motors, den Ansaugluftstutzen (140) am Ausgang des Ladeluftkühlers (RAS) und den akustischen Dämpfer (120), der mit dem Ausgang des Turboverdichters verbunden ist, integriert, und dass dieses kompakte Modul (M) in den oberen Bereich der Brennkraftmaschine an Stelle des Ansaugluftstutzens eingefügt ist.

2. Anordnung nach Anspruch 1, **dadurch gekennzeichnet, dass** der akustische Dämpfer (120) direkt und ohne Zwischenteil auf den Ansaugluftstutzen (140) montiert ist, und dass der Luftdosierer (130) neben dem Ansaugluftstutzen (140) derart montiert ist, dass der akustische Dämpfer (120), der Ansaugluftstutzen (140) und der Luftdosierer im Wesentlichen gefluchtet und nebeneinander sind, um das von dem kompakten Modul (M) begrenzte Volumen einzuschränken.

3. Anordnung nach Anspruch 2, **dadurch gekennzeichnet, dass** der Luftdosierer (130) auf den Ausgangsluftstutzen (150) des Ladeluftkühlers (RAS) montiert ist, der neben dem Ansaugluftstutzen (140) liegt und mit ihm starr verbunden ist.

4. Aufgeladene Dieselbrennkraftmaschine, die einen Dieselmotor (100), einen Turboverdichter (110), der von einer Turbine (115) angetrieben wird, die auf dem Auspuffstrang der Gase des Motors angeordnet ist, und einen Luftansaugstrang zum Motor (100) mit einem Ladeluftkühler (RAS) aufweist, **dadurch gekennzeichnet, dass** seine Architektur einem der Ansprüche 1 bis 3 entspricht.

5. Fahrzeug, insbesondere Kraftfahrzeug, mit einem Antrieb des Typs aufgeladener Dieselantrieb, **dadurch gekennzeichnet, dass** er eine Brennkraftmaschine nach Anspruch 4 aufweist.

## Claims

1. An assembly for a supercharged diesel powertrain, **characterized in that** a compact module (M) is formed integrating in the form of a single and same piece the choke (130) for admission of air to the engine, the air admission connection (140) to the outlet of the supercharging air cooler (RAS) and the acoustic attenuator (120) connected to the outlet of the turbocharger, and **in that** this compact module (M) is inserted in the upper zone of the powertrain in place of the air admission connection.

2. The assembly according to Claim 1, **characterized in that** the acoustic attenuator (120) is mounted directly and without intermediate part on the air admission connection (140), and **in that** the choke (130) is mounted adjacent to the air admission connection (140) such that the acoustic attenuator (120), the air admission connection (140) and the choke are substantially aligned and adjacent to limit the volume occupied by the compact module (M).

3. The assembly according to Claim 2, **characterized in that** the choke (130) is mounted on the air outlet connection (150) of the supercharging air cooler (RAS), which is adjacent and rigidly connected to the air admission connection (140).

4. A supercharged diesel powertrain, including a diesel engine (100), a turbocharger (110) driven by a turbine (115) placed on the exhaust line of the gases of the engine, and an admission line of air to the engine (100) with a supercharging air cooler (RAS), **characterized in that** its assembly is in accordance with any one of Claims 1 to 3.

5. A vehicle, in particular a motor vehicle, with an engine power of the supercharged diesel type, **characterized in that** it includes a powertrain according to Claim 4.
